# EUROPÄISCHE PATENTSCHRIFT

(11) **EP 3 649 626 B1**
(45) Veröffentlichungstag und Bekanntmachung des Hinweises auf die Patenterteilung: **18.02.2026**
(21) Anmeldenummer: 18738194.2
(22) Anmeldetag: 29.06.2018
(51) Int. Cl.: G07D 11/16, G07D 11/40, G07D 11/00, B65G 60/00, B65G 59/06, B65B 7/28, B65B 5/06, B65B 25/14

(54) **VORRICHTUNG UND VERFAHREN ZUM BEFÜLLEN VON BEHÄLTERN MIT WERTDOKUMENTEN, INSBESONDERE BANKNOTEN, SOWIE WERTDOKUMENTBEARBEITUNGSSYSTEM**
DEVICE AND METHOD FOR FILLING CONTAINERS WITH VALUE DOCUMENTS, IN PARTICULAR BANKNOTES, AND SYSTEM FOR PROCESSING VALUE DOCUMENTS
DISPOSITIF ET PROCÉDÉ DE REMPLISSAGE DE CONTENANTS AVEC DES DOCUMENTS DE VALEUR, EN PARTICULIER DES BILLETS DE BANQUE, ET SYSTÈME DE TRAITEMENT DE DOCUMENTS DE VALEUR

(30) Priorität: 03.07.2017 DE 102017006281
(43) Veröffentlichungstag der Anmeldung: 13.05.2020
(73) Patentinhaber: Giesecke+Devrient Currency Technology GmbH, 81677 München (DE)
(72) Erfinder: DEMMELER, Erwin, 87700 Memmingen (DE); HILDEBRANDT, Thomas, 85652 Pliening (DE); JAKOBS, Andreas, 81673 München (DE)
(74) Vertreter: Giesecke+Devrient IP
(86) Internationale Anmeldenummer: PCT/EP2018/000331
(87) Internationale Veröffentlichungsnummer: WO 2019/007543

(56) Entgegenhaltungen:
- EP-A1- 0 955 259
- EP-A1- 0 955 259
- WO-A1-2016/026659
- DE-A1- 102006 019 153
- DE-A1- 102006 019 153
- DE-A1- 102012 022 922
- DE-A1- 102012 022 922
- DE-A1- 3 806 512
- DE-A1- 3 806 512
- US-A- 2 595 849
- US-A- 2 595 849

## Beschreibung

Die Erfindung betrifft eine Vorrichtung und ein Verfahren zum Befüllen von Behältern mit Wertdokumenten, insbesondere Banknoten, sowie ein Wertdokumentbearbeitungssystem mit einer solchen Vorrichtung.

In sog. Cash Centern, etwa bei Werttransportunternehmen oder Zentralbanken, in denen eine Vielzahl von Banknoten geprüft, sortiert, gezählt, kommissioniert und/oder banderoliert werden, werden die bearbeiteten Banknoten zu Lagerungs- und/ oder Transportzwecken häufig in dafür vorgesehene Behälter gefüllt.

Aus der US 2 595 849 A ist eine Vorrichtung zum Befüllen von Behältern bekannt. Nach dem Befüllen werden die Behälter verschlossen. Dabei werden sowohl die Behälter als auch die Deckel gestapelt vorgehalten und zur Benutzung vom Stapel entfernt.

Es ist Aufgabe der vorliegenden Erfindung, das Befüllen von Behältern mit Wertdokumenten, insbesondere Banknoten, effizienter, insbesondere unterbrechungsfrei, zu machen.

Diese Aufgabe wird durch die Vorrichtung, das Verfahren sowie das Wertdokumentbearbeitungssystem gemäß den unabhängigen Ansprüchen gelöst. Die erfindungsgemäße Vorrichtung zum Befüllen von Behältern mit Wertdokumenten, insbesondere Banknoten, weist auf: eine Behälteraufnahmeeinrichtung, welche dazu eingerichtet ist, einen Behälterstapel, welcher zwei oder mehrere Behälter zur Aufnahme von Wertdokumenten aufweist, aufzunehmen, eine Deckelaufnahmeeinrichtung, welche dazu eingerichtet ist, einen Deckelstapel, welcher zwei oder mehrere Deckel zum Verschließen der Behälter aufweist, aufzunehmen, eine Behälterentnahmeeinrichtung, welche dazu eingerichtet ist, einen Behälter, insbesondere den jeweils untersten Behälter, aus dem Behälterstapel zu entnehmen, eine Verschließeinrichtung und eine Transporteinrichtung, welche dazu eingerichtet ist, den aus dem Behälterstapel entnommenen Behälter zu einer Befüllstation zu befördern, in welcher der Behälter mit Wertdokumenten befüllt werden kann, und den mit Wertdokumenten befüllten Behälter zur Verschließeinrichtung zu befördern, welche dazu eingerichtet ist, den befüllten Behälter mit einem aus dem Deckelstapel entnommenen Deckel zu verschließen. Die Verschließeinrichtung kann dazu eingerichtet sein, einen Deckel, insbesondere der jeweils unterste Deckel des Deckelstapels, von dem Deckelstapel zu entnehmen. Das Entnehmen des (vorzugsweise untersten) Deckels von dem Deckelstapel kann aber auch durch einen andere Einrichtung der Vorrichtung durchgeführt werden, die zu diesem Zweck in der Nähe des Deckelstapel angeordnet ist, insbesondere am unteren Ende des Deckstapels. Alternativ zum Entnehmen von der Unterseite des Deckelstapels können die Behälter bzw. Deckel auch automatisiert von der Oberseite des jeweiligen Stapels entnommen werden, was jedoch den mechanischen Aufwand erhöht und nachteilig für das manuelle Deckel- bzw. Behälter-Nachfüllen ist.

Das erfindungsgemäße Wertdokumentbearbeitungssystem zum Bearbeiten, insbesondere Sortieren, Zählen und Prüfen, von Wertdokumenten, insbesondere Banknoten, weist eine Wertdokumentbearbeitungsvorrichtung auf, welche dazu eingerichtet ist, bearbeitete Wertdokumente in wenigstens einem Ausgabefach auszugeben, eine erfindungsgemäße Vorrichtung zum Befüllen von Behältern mit Wertdokumenten, und eine Befülleinrichtung auf, welche dazu eingerichtet ist, einen zur Befüllstation der Vorrichtung beförderten Behälter mit den im wenigstens einen Ausgabefach er Wertdokumentbearbeitungsvorrichtung ausgegebenen Wertdokumenten zu befüllen. Die in das Ausgabefach der Wertdokumentbearbeitungsvorrichtung ausgegebenen Wertdokumente können dort als lose Wertdokumentstapel oder in Form banderolierter und/oder mit Folie umschlungener Wertdokumentstapel vorliegen. Auch zum Befüllen der Behälter in der Vorrichtung können wahlweise Stapel loser oder banderolierter und/oder mit Folie umschlungene Wertdokumente verwendet werden. Vorzugsweise werden die Wertdokumente beim Befüllen der Behälter so in dem jeweiligen Behälter angeordnet, dass eine Kante des jeweiligen Wertdokuments auf dem Boden des Behälters steht, d.h. die Wertdokumente werden hochkant in dem Behälter angeordnet.

Bei dem erfindungsgemäßen Verfahren zum Befüllen von Behältern mit Wertdokumenten, insbesondere Banknoten, wird vorzugsweise der jeweils unterste Behälter aus einem Behalterstapel, welcher zwei oder mehrere Behälter zur Aufnahme von Wertdokumenten aufweist, entnommen und zu einer Befüllstation, in welcher der Behälter mit Wertdokumenten befüllt wird, befördert. Der mit Wertdokumenten befüllte Behälter wird weiter zu einer Verschließeinrichtung befördert, die den mit Wertdokumenten befüllten Behälter mit einem aus dem Deckelstapel entnommenen Deckel verschließt. Durch die Verschließeinrichtung kann der zum Verschließen verwendete Deckel, insbesondere der jeweils unterste Deckel des Deckelstapels, ggf. auch aus dem Deckelstapel entnommen werden.

In der bevorzugten Ausführungsform werden mit Wertdokumenten befüllbare Behälter sowie Deckel zum Verschließen dieser Behälter in jeweils einem Stapel bereitgestellt und von dem Stapel jeweils der unterste Behälter und/oder der unterste Deckel durch eine Behälterentnahmeeinrichtung bzw. Verschließeinrichtung entnommen. Die einzelnen entnommenen Behälter werden zunächst von einer Transporteinrichtung zum Befüllen mit Wertdokumenten zu einer Befüllstation und von dort zur Verschließeinrichtung befördert, wo die befüllten Behälter mit den einzeln entnommenen Deckeln verschlossen werden.

Der Behälterstapel wird dabei von einer Behälteraufnahmeeinrichtung und der Deckelstapel von einer Deckelaufnahmeeinrichtung aufgenommen. Vorzugsweise ist sowohl die Behälter- als auch die Deckelaufnahmeeinrichtung dazu eingerichtet, manuell oder automatisch mit weiteren Behältern bzw. Deckeln befüllt zu werden, wobei die der Behälter- und/oder der Deckelaufnahmeeinrichtung neu zugeführten Behälter bzw. Deckel von oben auf den jeweiligen Stapel aufgesetzt werden. So wird erreicht, dass die Behälter- bzw. Deckelentnahme nach dem sog. first-in-first-out-Prinzip erfolgen kann und so das Entnehmen der Behälter bzw. Deckel von unten durch das Nachlegen neuer Behälter bzw. Deckel von oben auf den jeweiligen Stapel nicht gestört wird. Dadurch wird ein Nachfüllen von Behältern und Deckeln im Betrieb der Vorrichtung ermöglicht, ohne dass die Entnahme, das Befüllen und Verschließen der Behälter unterbrochen werden muss.

Insgesamt erlaubt die Erfindung somit ein effizientes Befüllen von Behältern mit Wertdokumenten, insbesondere Banknoten.

In einer bevorzugten Ausführung sind die Behälter, welche in dem von der Behälteraufnahmeeinrichtung aufgenommenen Behälterstapel enthalten sind, und/oder die Deckel, welche in dem von der Deckelaufnahmeeinrichtung aufgenommenen Deckelstapel enthalten sind, entlang einer Stapelrichtung gestapelt, welche, insbesondere im Bereich der Behälterentnahmeeinrichtung bzw. Verschließeinrichtung, im Wesentlichen senkrecht auf einer Bewegungsrichtung des von der Transporteinrichtung beförderten Behälters steht, entlang die Behälter durch die Vorrichtung transportiert wird. Dabei verläuft die Bewegungsrichtung vorzugsweise im Wesentlichen horizontal und die Stapelrichtung der Behälter bzw. Deckel im Wesentlichen vertikal. Dadurch können zusätzliche Behälter oder Deckel einfach dem entsprechenden Stapel von oben zugeführt werden, während der Stapel nach Entnahme des jeweils untersten Behälters oder Deckels, beispielsweise durch die Schwerkraft, nach unten nachrutschen kann.

Beispielsweise ist die Behälterentnahmeeinrichtung derart eingerichtet, dass der aus dem Behälterstapel entnommene Behälter der Transporteinrichtung durch die Schwerkraft zugeführt wird. Alternativ oder zusätzlich ist die Verschließeinrichtung derart eingerichtet, dass der aus dem Deckelstapel entnommene Deckel durch die Schwerkraft auf dem befüllten Behälter abgelegt wird. Dadurch kann der Behälter der Transporteinrichtung auf einfache Weise zuverlässig zugeführt bzw. der Deckel auf dem befüllten Behälter auf einfache Weise zuverlässig abgelegt werden, insbesondere ohne dass zusätzliche, und ggf. verschleißbehaftete oder fehleranfällige mechanische Vorrichtungen notwendig sind. Darüber hinaus kann somit das Zuführen des Behälters bzw. das Ablegen des Deckels automatisch und unterbrechungsfrei durchgeführt werden. Alternativ kann die Behälterentnahmeeinrichtung auch derart eingerichtet sein, dass der aus dem Behälterstapel entnommene Behälter mit Hilfe eines Hubelements auf die Transporteinrichtung abgelegt wird.

Um das Zuführen des Behälters bzw. das Ablegen des Deckels noch zuverlässiger zu machen, kann die Behälterentnahmeeinrichtung bzw. die Verschließeinrichtung ein oder mehrere, insbesondere im Wesentlichen entlang der Stapelrichtung verlaufende Führungselemente aufweisen, welche dazu eingerichtet sind, den entnommenen und aufgrund der Schwerkraft fallenden oder nach unten rutschenden Behälter bzw. Deckel zur Transporteinrichtung hin bzw. auf den befüllten Behälter hin zu führen.

In einer weiteren bevorzugten Ausführung weist die Verschließeinrichtung ein erstes Schubelement auf, welches dazu eingerichtet ist, einen auf dem befüllten Behälter abgelegten Deckel relativ zum Behälter, insbesondere parallel zur Oberseite des Behälters, von einer Position, in der der Deckel auf dem Behälter aufgelegt aber noch nicht verriegelbar ist, in eine Verschlussposition zu verschieben, in welcher der Behälter mit dem Deckel verriegelbar ist. Dabei sind der Behälter und/oder der Deckel dazu eingerichtet, das Verschieben des Deckels relativ zum Behälter nur in einer vorgegebenen Richtung, insbesondere in der Richtung parallel zur Oberseite des Behälters, zu ermöglichen, so dass der Deckel zuverlässig in die Verschlussposition überführbar ist. Die Deckel und/oder Behälter können hierfür beispielsweise eine oder mehrere Führungen aufweisen, die insbesondere parallel zur Oberseite des Behälters verlaufen, etwa in Form von Rillen oder Nuten, in die ein Teil des Behälters bzw. Deckels eingreifen kann. Das erste Schubelement ist vorzugsweise als exzentrisch rotierendes Schubelement, insbesondere als exzentrisch gelagerte Rolle, ausgebildet und dazu eingerichtet, bei Rotation um eine Achse, die im Wesentlichen senkrecht zu einer durch die Verschiebung des Deckels relativ zum Behälter definierten Richtung verläuft, an einer umfänglichen Seitenfläche des Schubelements mit dem Deckel in Kontakt zu treten und den Deckel durch die Rotation in die Verschlussposition zu verschieben. Bei diesen Ausführungen wird ein besonders zuverlässiges und zeitsparendes Verschließen des befüllten Behälters mit dem Deckel ermöglicht.

In einer weiteren bevorzugten Ausführung weist die Verschließeinrichtung ein zweites Schubelement auf, welches dazu eingerichtet ist, den auf dem befüllten Behälter in der Verschlussposition angeordneten Deckel durch Betätigung eines am Deckel befindlichen Verschlusselements zu verriegeln. Das Verschlusselement des Deckels, das bevorzugt am Deckels befestigt oder in diesen integriert ist, kann ein Verschlussriegel sein, insbesondere ein Drehriegel. Das zweite Schubelement der Verschließeinrichtung kann dazu eingerichtet sein, den Behälter durch Drehen des am Deckel befindlichen Drehriegels zu verriegeln. Das zweite Schubelement kann dabei als rotierbares Schubelement ausgebildet sein, welches einen senkrecht zur Rotationsachse des Schubelements verlaufenden Betätigungsvorsprung aufweist, der dazu eingerichtet ist, bei Rotation des Schubelements mit dem Verschlussriegels am Deckel, beispielsweise des Drehriegels, zu wechselwirken. Auch hierdurch wird ermöglicht, den befüllten Behälter besonders zuverlässig und zeitsparend mit dem Deckel zu verschließen.

In einer weiteren bevorzugten Ausführung weist die Verschließeinrichtung ein erstes Stützelement und ein zweites Stützelement auf, die an einander gegenüberliegenden Seiten der im Deckelstapel befindlichen Deckel angeordnet sind und dazu eingerichtet sind, von einer Ausgangsposition der Stützelemente, in der die Stützelemente vom Deckelstapel zurückgezogen sind, in eine Stützposition gebracht zu werden, in der das erste und zweite Stützelement den von der Deckelaufnahmeeinrichtung aufgenommenen Deckelstapel gegen die Schwerkraft abstützen. Ferner weist die Verschließeinrichtung vorzugsweise ein erstes Vereinzelungselement und ein zweites Vereinzelungselement auf, die an einander gegenüberliegenden Seiten der im Deckelstapel befindlichen Deckel angeordnet sind und dazu eingerichtet sind, von einer Ausgangsposition der Vereinzelungselemente, in der die Vereinzelungselemente vom Deckelstapel zurückgezogen sind, in eine Vereinzelungsposition gebracht zu werden, in der das erste und zweite Vereinzelungselement die über dem untersten Deckel gestapelten Deckel gegen die Schwerkraft abstützen. Die Verschließeinrichtung ist insbesondere dazu eingerichtet, bei Entnahme des untersten Deckels aus dem Deckelstapel das erste und zweite Stützelement aus der jeweiligen Stützposition in die jeweilige Ausgangsposition zu bewegen und, vorzugsweise gleichzeitig, das erste und zweite Vereinzelungselement aus der jeweiligen Ausgangsposition in die jeweilige Vereinzelungsposition zu bewegen. Vorzugsweise schieben sich das erste und zweite Vereinzelungselement dabei zwischen den untersten Deckel des Deckelstapels und den darüber liegenden nächsten Deckeln. Dadurch kann der unterste Deckel des Deckelstapels einfach und schnell mit sehr geringem mechanischem Aufwand entnommen werden.

In einer weiteren bevorzugten Ausführung ist das erste Stützelement mit dem ersten Vereinzelungselement und das zweite Stützelement mit dem zweiten Vereinzelungselement derart mechanisch gekoppelt, dass wenn zum Entnehmen des jeweils untersten Deckels aus dem Deckelstapel das erste und das zweite Stützelement aus der Stützposition entfernt werden, dass dann aufgrund der mechanischen Kopplung gleichzeitig das erste und das zweite Vereinzelungselement in die Vereinzelungsposition gebracht werden. Vorzugsweise wirkt die mechanische Kopplung dabei als Hebel und verhindert zuverlässig die gleichzeitige Entnahme mehr als eines Deckels aus dem Deckelstapel. Insbesondere kann durch die mechanische Kopplung das Risiko einer Fehlfunktion der Verschließeinrichtung minimiert werden, bei der der Deckelstapel nicht mehr in der Deckelaufnahmeeinrichtung gehalten und das Befüllen der Behälter unterbrochen werden würde.

In einer weiteren bevorzugten Ausführung weist die Transporteinrichtung ein Transportelement zur Beförderung des Behälters und wenigstens ein Hubelement zum vertikalen Bewegen des jeweiligen Behälters auf, wobei das Hubelement z.B. im Bereich der Behälterentnahmeeinrichtung und/oder im Bereich der Befüllstation und/oder im Bereich der Verschließeinrichtung angeordnet und dazu eingerichtet ist, den aus dem Behälterstapel entnommenen Behälter dem Transportelement zuzuführen und von dem Transportelement aus nach oben anzuheben bzw. den jeweiligen Behälter von oben auf dem Transportelement abzulegen. Zum Beispiel ist ein Hubelement im Bereich der Befüllstation angeordnet und dazu eingerichtet, den jeweiligen Behälter im Bereich der Befüllstation von dem Transportelement aus nach oben anzuheben und durch das Anheben so zu positionieren, dass Wertdokumente mit Hilfe einer Befülleinrichtung von oben in den jeweiligen Behälter eingelegt werden können. Alternativ oder zusätzlich ist ein Hubelement im Bereich der Verschließeinrichtung angeordnet und dazu eingerichtet, den jeweiligen Behälter im Bereich der Verschließeinrichtung von dem Transportelement aus nach oben anzuheben und durch das Anheben so zu positionieren, dass die Verschließeinrichtung diesen mit einem Deckel verschließen kann. Alternativ oder zusatzlich ist ein Hubelement im Bereich der Behälterentnahmeeinrichtung angeordnet und dazu eingerichtet, den jeweiligen stapeluntersten Behälter zu dem Zeitpunkt, wenn dieser aus dem Behälterstapel entnommen wird, zu stützen, den entnommenen Behälter abzusenken und durch das Absenken auf dem Transportelement abzulegen. Dabei ist das Transportelement vorzugsweise als Transportband ausgebildet und/oder weist eine Vielzahl von Transportrollen auf. Das Hubelement kann beispielsweise als hydraulisch, pneumatisch oder elektromechanisch betätigter Hubtisch ausgebildet sein.

Vorzugsweise ist das wenigstens eine Hubelement dazu eingerichtet, den Behälter im Bereich der Befüllstation derart anzuheben, dass der Behälter von einem oder mehreren Positionierungselementen der Befüllstation geführt und in einer Befüllposition positioniert, insbesondere ausgerichtet, wird. Dadurch kann der in einer definierten Position befindliche Behälter in der Befüllstation besonders zuverlässig mit Wertdokumenten befüllt werden, wobei das Risiko einer Fehlfunktion, welche das Befüllen des Behälters unterbrechen würde, vermindert werden kann.

Vorzugsweise weist auch die Verschließeinrichtung ein oder mehrere Positionierungselemente auf, welche dazu eingerichtet sind, den befüllten Behälter bei Anheben durch das wenigstens eine Hubelement in einer Deckelaufnahmeposition zu positionieren, insbesondere auszurichten. Dadurch kann der Deckel zuverlässig und präzise auf dem befüllten Behälter abgelegt, in die Verschlussposition verschoben und/oder das am Deckel befindliche Verschlusselement betätigt werden, wobei das Risiko einer Fehlfunktion, welche das befüllen von Behältern unterbrechen würde, vermindert werden kann.

In einer weiteren bevorzugten Ausführung weist die Vorrichtung eine Ausgabeeinrichtung auf, welche dazu eingerichtet ist, den mit Wertdokumenten befüllten und mit dem Deckel verschlossenen Behälter in einem Behälter-Ausgabestapel zuunterst (an der untersten Position des Behälter-Ausgabestapels) anzuordnen, wobei die Transporteinrichtung dazu eingerichtet ist, den befüllten und verschlossenen Behälter von der Verschließeinrichtung zur Ausgabeeinrichtung zu befördern. Dadurch werden die befüllten und verschlossenen Behälter zuverlässig nach dem first-in-first-out-Prinzip gestapelt und zur Weiterbearbeitung, beispielsweise zum Transport, zur Verfügung gestellt. Beispielsweise können die mit Wertdokumenten befüllten Behälter manuell aus dem Behälter-Ausgabestapel entnommen werden. Die Ausgabeeinrichtung kann aber auch dazu eingerichtet sein, die befüllten Behälter aus dem Behälter-Ausgabestapel automatisiert zu entnehmen und, z.B. zum manuellen oder automatischen Abtransportieren, zur Verfügung zu stellen.

In einer weiteren bevorzugten Ausführung weist die Vorrichtung eine an die Vorrichtung heranfahrbare, insbesondere andockbare, Behältertransporteinrichtung auf, insbesondere einen Transportwagen, welche dazu eingerichtet ist, den Behälter-Ausgabestapel aufzunehmen. Die Ausgabeeinrichtung ist dazu eingerichtet, die mit Wertdokumenten befüllten und mit dem Deckel verschlossenen Behälter einzeln nacheinander an die herangefahrene bzw. angedockte Behältertransporteinrichtung auszugeben bzw. zu übergeben. Vorzugsweise ist die Behältertransporteinrichtung, insbesondere der Transportwagen, dazu eingerichtet, mehrere Behälter-Ausgabestapel nebeneinander aufzunehmen. Dadurch können die in den Behältern angeordneten Wertdokumente einfach transportiert und/ oder gelagert werden.

Die Behältertransporteinrichtung weist bevorzugt mindestens eine Stapelführung zur Aufnahme von in Behälter-Ausgabestapeln gestapelten Behältern auf, die mit Wertdokumenten befüllt und mit einem Deckel verschlossen sind. Bevorzugt ist die Behältertransporteinrichtung im Bereich unter der mindestens einen Stapelführung derart offen ausgebildet, dass sie ein Heranfahren der Behältertransporteinrichtung an die Vorrichtung derart ermöglicht, dass die Behälter mit Hilfe von Transportelementen der Vorrichtung in den Bereich unter die mindestens eine Stapelführung transportiert werden können und mit Hilfe von Hubelementen der Vorrichtung von unten in die mindestens eine Stapelführung geschoben werden können.

In einer weiteren bevorzugten Ausführung weist die Vorrichtung eine Steuereinrichtung auf, welche dazu eingerichtet ist, Identifikationsdaten der Wertdokumente, mit denen der Behälter von der Befüllstation befüllt wurde, mit Identifikationsdaten des Behälters in einer Datenbank zu verknüpfen. Die Identifikationsdaten der Wertdokumente werden an die Steuereinrichtung z.B. durch die Wertdokumentbearbeitungsvorrichtung übermittelt, aus deren Ablagefach die Wertdokumente entnommen werden und die die Wertdokumente vor deren Ablegen in den Behälter bearbeitet, insbesondere geprüft hat. Die Identifikationsdaten des Behälters können beispielsweise maschinenlesbar, etwa als Nummernfolge oder Barcode, auf dem Behälter aufgedruckt oder auf einem drahtlos auslesbaren Transponder, beispielsweise einem RFID-Tag, gespeichert sein. Vorzugsweise weist die Vorrichtung dazu eine Leseeinrichtung auf, welche dazu eingerichtet ist, die Identifikationsdaten des Behälters zu erfassen, und welche im Bereich der Behälterentnahmeeinrichtung, der Befüllstation oder der Verschließeinrichtung angeordnet ist. Dadurch können die Wertdokumente, mit denen die Behälter befüllt sind, einfach und zuverlässig, insbesondere zu einem späteren Zeitpunkt, beispielsweise in einem Lager, identifiziert und/oder nachverfolgt werden.

Erfindungsgemäß weist die Vorrichtung eine Befülleinrichtung auf, welche eine Greifeinrichtung aufweist und dazu eingerichtet ist, einen Stapel von Wertdokumenten mit der Greifeinrichtung zu greifen und in dem zur Befüllstation beförderten Behälter abzulegen.

In einer bevorzugten Ausführung des Wertdokumentbearbeitungssystems weist die Befülleinrichtung eine Greifeinrichtung auf und ist dazu eingerichtet, einen im mindestens einen Ausgabefach ausgegebenen Stapel von Wertdokumenten mit der Greifeinrichtung zu greifen und in dem zur Befüllstation beförderten Behälter abzulegen, wobei die Wertdokumente in dem Wertdokumentstapel lose oder banderoliert und/oder mit Folie umschlungen sein können.

Bei beiden vorstehend beschriebenen Ausführungen der Vorrichtung bzw. des Wertdokumentbearbeitungssystems ist die Befülleinrichtung vorzugsweise als Roboter bzw. als Roboterarm ausgebildet. Bei beiden Ausführungen kann der Behälter schnell und präzise mit Wertdokumenten befüllt werden, welche von der Wertdokumentbearbeitungsvorrichtung beispielsweise in einem losen Stapel, banderoliert oder verpackt ausgegeben werden.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: ein Beispiel eines Systems zum Bearbeiten von Wertdokumenten mit einer Vorrichtung zum Befüllen von Behältern;
- Fig. 2: ein Beispiel zur Veranschaulichung des Entnehmens eines Deckels aus einem Deckelstapel;
- Fig. 3: ein Beispiel einer Verschließeinrichtung; und
- Fig. 4: ein Beispiel einer Behältertransporteinrichtung.

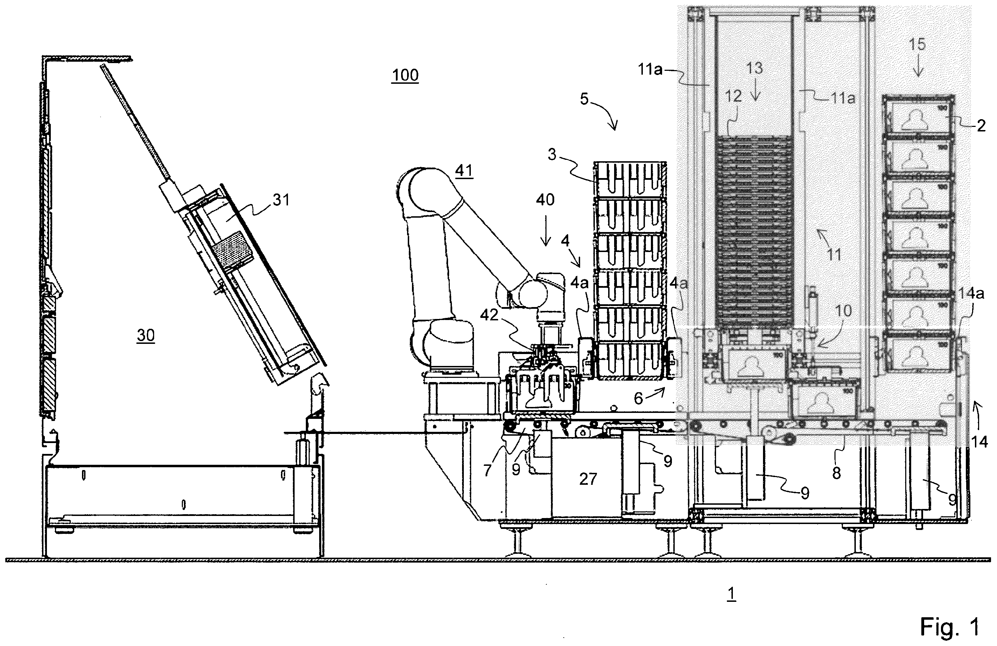

Figur 1 zeigt ein Beispiel eines Systems 100 zum Bearbeiten, insbesondere zum Sortieren, Zählen und/oder Prüfen, von Wertdokumenten 2, insbesondere Banknoten. Das System weist eine Wertdokumentbearbeitungsvorrichtung 30, eine Vorrichtung 1 zum Befüllen von Behältern 3 mit Wertdokumenten 2 sowie eine Befülleinrichtung 41 auf. In der Vorrichtung 1 werden einzelne Behälter 3 an einer Befüllstation 40 bereitgestellt, wo sie mit Hilfe der Befülleinrichtung 41 mit von der Wertdokumentbearbeitungsvorrichtung 30 bearbeiteten Wertdokumenten 2 befüllt werden können. Die befüllten Behälter werden dann mit einem Deckel verschlossen und schließlich ausgegeben. Dies wird nachfolgend näher erläutert.

Die Vorrichtung 1 weist insbesondere eine Behälteraufnahmeeinrichtung 4 auf, welche dazu eingerichtet ist, einen Behälterstapel 5 aufzunehmen. Die Behälter 3 sind vorzugsweise derart ausgebildet, insbesondere geformt, dass sie übereinander stapelbar sind. Beispielsweise können die Behälter an ihrer Unterseite Ausformungen, wie etwa Rippen, aufweisen, welche beim Aufeinanderstapeln in entsprechende Ausnehmungen an der Oberseite oder Öffnung der Behälter 3 eingreifen, so dass der Behälterstapel 5 stabil steht und die Behälter 3 im Behälterstapel 5 relativ zueinander ausgerichtet sind.

Im gezeigten Beispiel wird die Behälteraufnahmeeinrichtung 4 von Behälterführungen 4a gebildet, welche den jeweils untersten Behälter 3 des Behälterstapels 5 führen und stützen bzw. halten. Dem Behälterstapel 5 können somit von einem Benutzer, insbesondere auch während des Betriebs der Vorrichtung 1, weitere Behälter 3 hinzugefügt werden, indem diese einfach auf das obere Ende des Behälterstapels 5 aufgesetzt werden.

Im Bereich der Behälterführungen 4a ist eine Behälterentnahmeeinrichtung 6 angeordnet, welche dazu eingerichtet ist, den jeweils untersten Behälter 3 des Behälterstapels 5 aus dem Stapel zu entnehmen. Die Behälterentnahmeeinrichtung 6 kann beispielsweise Halteelemente aufweisen, welche den untersten Behälter 3 des Stapels gegen die Schwerkraft abstützen. Beim Entnehmen des untersten Behälters 3 aus dem Behälterstapel 5 werden die Halteelemente derart verschwenkt, dass der unterste Behälter 3 freigegeben wird und aus der Behälteraufnahmeeinrichtung 4 herausrutschen kann und/oder mit Hilfe eines Hubelements 9 nach unten abgesenkt werden kann.

Die Vorrichtung 1 weist ferner eine Transporteinrichtung 7 auf, welche ein Transportelement 8 und mehrere Hubelemente 9 umfasst und dazu eingerichtet ist, den aus dem Behälterstapel 5 entnommenen Behälter 3 zur Befüllstation 40 zu befördern. Im gezeigten Beispiel wird das Transportelement 8 von mehreren Transportbändern gebildet, auf denen die Behälter 3 abgelegt werden und in im Wesentlichen horizontaler Richtung von der Behälterentnahmeeinrichtung 6 aus nach rechts und links verfahren werden können. Die Hubelemente 9 sind vorzugsweise als hydraulisch, pneumatisch oder elektromechanisch betätigbare Hubtische ausgebildet, welche die Behälter 3 vom Transportelement 8 anheben bzw. auf diesem ablegen können. Beispielsweise wird der von der Behälterentnahmeeinrichtung 6 zur Befüllstation 40 beförderte Behälter 3 von einem Hubelement 9 vom Transportelement 8 abgehoben und dabei durch Positionierungselemente der Befülleinrichtung 41, wie etwa Führungsschienen, in einer Befüllposition positioniert.

Die Befülleinrichung 41 kann beispielsweise als Roboter bzw. Roboterarm ausgebildet sein und weist eine Greifeinrichtung 42 auf, welche dazu eingerichtet ist, mehrere Wertdokumente 2, insbesondere einen Stapel von losen oder banderolierten und/oder mit Folie umschlungenen Wertdokumenten 2, zu greifen. Mit Hilfe der Greifeinrichtung 42 werden die in einem Ausgabefach 31 der Wertdokumentbearbeitungsvorrichtung 30 ausgegebenen bearbeiteten Wertdokumente 2 aus dem Ausgabefach 31 entnommen und in den in der Befüllposition positionierten Behälter 3 gelegt bzw. gestellt. Sobald der Behälter ganz bzw. teilweise mit Wertdokumenten befüllt ist, wird der befüllte Behälter 3 vom Hubelement 9 wieder auf dem Transportelement 8 abgesetzt und von diesem zu einer Verschließeinrichtung 10 befördert.

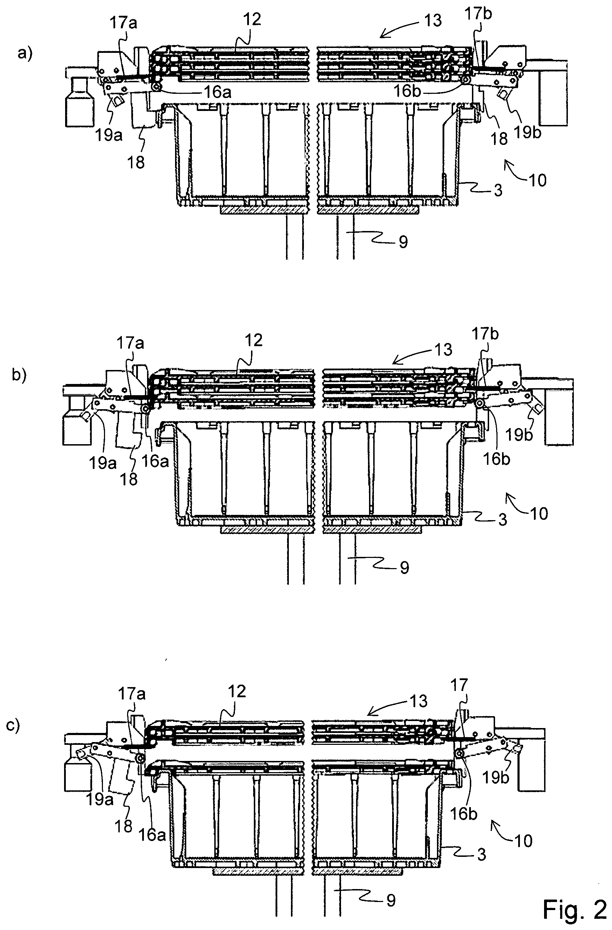

Die Verschließeinrichtung 10 ist im Bereich einer Deckelaufnahmeeinrichtung 11 der Vorrichtung 1 angeordnet und dazu eingerichtet, den jeweils untersten Deckel 12 aus einem Deckelstapel 13, welcher von der Deckelaufnahmeeinrichtung 11 aufgenommen ist, zu entnehmen und damit den befüllten Behälter 3 zu verschließen. Dies wird im Zusammenhang mit Figur 2 weiter unten noch näher erläutert.

Die Deckelaufnahmeeinrichtung 11 weist im vorliegenden Beispiel Deckel-Ausrichtelemente 11a auf, welche dazu eingerichtet sind, die Deckel 12 im Deckelstapel 13 relativ zueinander auszurichten und diese bei ihrem Nachrutschen mittels Schwerkraft nach unten zur Verschließeinrichtung 10 zu führen. Ein Benutzer kann dem Deckelstapel 13 jederzeit, insbesondere auch während des Betriebs der Vorrichtung 1, weitere Deckel 12 hinzufügen, indem diese einfach am oberen Ende der Deckelaufnahmeeinrichtung 11 eingegeben und/oder auf das obere Ende des Deckelstapels 13 gelegt werden.

Die Deckel 12 sind vorzugsweise derart ausgebildet, insbesondere geformt, dass sie stabil und präzise übereinander stapelbar sind. Beispielsweise weisen die Deckel 12 auf ihrer Ober- und Unterseite aufeinander abgestimmte Ausbuchtungen bzw. Ausnehmungen, etwa in Form von Rippen, auf, welche beim Stapeln miteinander in Eingriff stehen und ein platzsparendes Stapeln, bei dem von einem Deckel 12 beispielsweise nur rund 10 mm Stapelhöhe beansprucht werden, und eine vorgegebene Ausrichtung der Deckel 12 zueinander ermöglichen. Ist ein Deckel in falscher Orientierung im Deckelstapel enthalten, fällt dies einer Bedienperson sofort auf, da sich der Deckelstapel dann an dieser Stelle verschiebt und der Stapel weniger stabil ist.

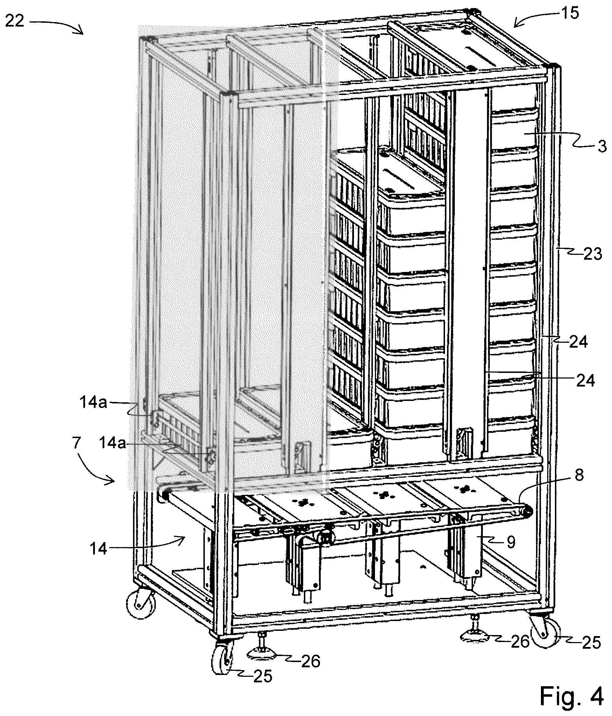

Die befüllten und verschlossenen Behälter 3 werden vom Transportelement 8 weiter bis zu einer Ausgabeeinrichtung 14 befördert, welche dazu eingerichtet ist, die Behälter 3 in einem Behälter-Ausgabestapel 15 auszugeben. Die Ausgabeeinrichtung 14 weist dabei vorzugsweise Rastelemente 14a auf, welche den durch ein Hubelement 9 vom Transportelement 8 nach oben angehobenen Behälter 3 gegen die Schwerkraft abstützen, so dass der Behälter 3 beim Zurückfahren des Hubelements 9 nach unten, zurück zum Transportelement 8, in der Ausgabeeinrichtung 14 verbleibt. Die Rastelemente 14a sind dazu eingerichtet, dass ein zum Behälter-Ausgabestapel 15 hinkommenden Behälters 3 von unten nach oben durch die Rastelemente 14a hindurchgeschoben werden können, aber der darüber angeordnete Behälter-Ausgabestapel 15 durch die Rastelemente 14a gegen die Schwerkraft abgestützt wird. Für jeden Behälter-Ausgabestapel 15 sind mindestens zwei Rastelemente 14a, z.B. vier Rastelemente 14a, auf einander gegenüber liegenden Seiten des Behälter-Ausgabestapels 15 vorhanden. Ein Beispiel für solche Rastelemente 14a ist in Fig. 4 gezeigt.

Auf diese Weise kann die Ausgabeeinrichtung 14 dem Behälter-Ausgabestapel 15 weitere befüllte und verschlossenen Behälter 3 von unten hinzufügen, so dass die Behälter 3 bzw. die in ihnen enthaltenen Wertdokumente 2 in der Reihenfolge der Bearbeitung durch die Wertdokumentbearbeitungsvorrichtung 30 vom oberen Ende des Behälter-Ausgabestapel 15 entnommen werden können.

Die Vorrichtung 1 weist vorzugsweise eine Steuereinrichtung 27 auf, welche dazu eingerichtet ist, Identifikationsdaten der Wertdokumente 2, welche von der Wertdokumentbearbeitungsvorrichtung 30 bearbeitet und an der Befüllstation 40 in die Behälter 3 gefüllt wurden, mit Identifikationsdaten der jeweiligen Behälter 3 in einer Datenbank (nicht dargestellt) zu verknüpfen. Zu diesem Zweck ist die Steuereinrichtung 27 mit der Wertdokumentbearbeitungsvorrichtung 30 über eine geeignete Datenverbindung (drahtlose oder drahtgebunden) verbunden, über welche die Identifikationsdaten, beispielsweise Seriennummern oder eine Identifikation des Einzahlers des jeweiligen Wertdokumentstapels oder des Deposits des jeweiligen Wertdokumentstapels, der im Ausgabefach 31 ausgegebenen Wertdokumente 2 an die Steuereinrichtung 27 übertragen werden. Die Identifikationsdaten der Behälter 3, beispielsweise Kennnummern, können etwa beim Entnehmen des jeweils untersten Behälters 3 aus dem Behälterstapel 5 an der Behälterentnahmeeinrichtung 4 oder beim Positionieren der Behälter 3 in der Befüllposition an der Befüllstation 40 sensorisch erfasst werden, beispielsweise durch Lesen eines an den Behältern 3 angebrachten Barcodes oder RFID-Tags mittels einer Leseeinrichtung, die mit der Steuereinrichtung 27 verbunden ist.

Die Datenbank kann vorzugsweise Teil eines Cash Centers sein, so dass bestimmte Wertdokumente 2, z.B. die zu einem bestimmten Deposit gehörenden Wertdokumente, über die Zuordnung zu dem jeweiligen Behälter 3 einfach bestimmt und/oder gefunden werden können. Alternativ oder zusätzlich können die Identifikationsdaten der Wertdokumente 2 auch von einem les- und beschreibbaren Chip, welcher am jeweiligen Behälter 3 angebracht ist, gespeichert werden.

Figur 2 zeigt ein Beispiel zur Veranschaulichung des Entnehmens des jeweils untersten Deckels 12 aus einem Deckelstapel 13 in der Verschließeinrichtung 10, welche ein erstes Stützelement 16a und ein zweites Stützelement 16b sowie ein erstes Vereinzelungselement 17a und ein zweites Vereinzelungselement 17b aufweist. Beim Entnehmen des untersten Deckels 12 aus dem Deckelstapel 13 wird der mit Wertdokumenten befüllte Behälter 3 von einem Hubelement 9 in eine Deckelaufnahmeposition gebracht. Positionierungselemente 18 der Verschließeinrichtung 10 ermöglichen dabei eine genaue Positionierung bzw. Ausrichtung des befüllten Behälters 3 unter dem Deckelstapel 13 bzw. der Verschließeinrichtung 10.

In Figur 2a ist dargestellt, wie der unterste Deckel 12 des Deckelstapels 13 und damit auch der gesamte Deckelstapel 13 vom ersten und zweiten Stützelement 16a, 16b in einer Stützposition gegen die Schwerkraft abgestützt wird. Zum Entnehmen des untersten Deckels 12 werden das erste und zweite Stützelement 16a, 16b aus der Stützposition und gleichzeitig das erste und zweite Vereinzelungselement 17a, 17b in eine Vereinzelungsposition gebracht, d.h. zwischen den untersten Deckel 12 des Deckelstapels 13 und den darüber liegenden Deckel 12 geschoben. Dies ist in Figur 2b dargestellt. Die Bewegungen der Stützelemente 16a, 16b aus der Stützposition heraus und die Bewegungen der Vereinzelungselement 17a, 17b in die Vereinzelungsposition hinein werden vorzugsweise synchron ausgeführt. Zu diesem Zweck ist im gezeigten Beispiel das erste Stützelement 16a mit dem ersten Vereinzelungselement 17a über ein erstes Kopplungselement 19a mechanisch gekoppelt. Analog ist das zweite Stützelement 16b mit dem zweiten Vereinzelungselement 17b über ein zweites Kopplungselement 19b mechanisch gekoppelt. Durch Verschwenken der Kopplungselemente 19a, 19b können so die Stützelemente 16a, 16b und die Vereinzelungselement 17a, 17b gegenläufig bewegt werden.

In Figur 2c haben die Stützelemente 16a, 16b den untersten Deckel 12 des Deckelstapels 13 freigegeben, so dass der unterste Deckel 12 durch die Schwerkraft, typischerweise etwa 20 mm bis 30 mm tief, auf den in der Deckelaufnahmeposition positionierten befüllten Behälter 3 fallen kann. Dabei kann der fallende Deckel 12 durch entsprechende Deckelführungen (nicht gezeigt) geführt werden.

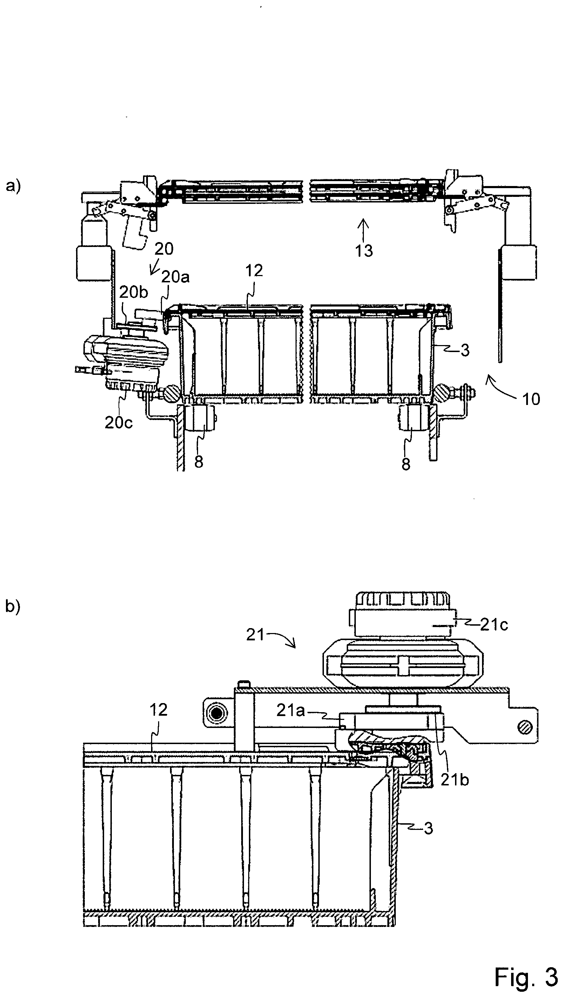

In Figur 3 ist ein Beispiel zur Veranschaulichung des Verschließens eines mit Wertdokumenten befüllten Behälters 3 mit einem Deckel 12 durch die Verschließeinrichtung 10 gezeigt.

Wie in Figur 3a dargestellt, wurde der befüllte Behälter 3 von einem Hubelement (vgl. Fig. 1) aus der Deckelaufnahmeposition zurück zum Transportelement 8 überführt, nachdem der Deckel 12 auf dem befüllten Behälter 3 abgelegt wurde.

Die Verschließeinrichtung 10 weist im gezeigten Beispiel ein erstes Schubelement 20 auf, welches dazu eingerichtet ist, den Deckel 12, z.B. horizontal, in eine Verschlussposition zu verschieben. In der Verschlussposition schließt der Deckel 12 seitlich vorzugsweise bündig mit dem Behälter 3 ab. Das erste Schubelement 20 weist zu diesem Zweck eine exzentrisch gelagerte Kontaktrolle 20a auf, welche auf einer ersten scheibenförmigen Basisplatte 20b exzentrisch versetzt montiert ist. Bei einer von einem ersten pneumatischen Drehzylinder 20c angetriebenen Rotation der ersten Basisplatte 20b wechselwirkt die Umfangsfläche der Kontaktrolle 20a mit dem Deckel 12 und verschiebt diesen relativ zum Behälter 3 in die Verschlussposition (in Fig. 3a nach rechts).

In Figur 3b ist ein zweites Schubelement 21 der Verschließeinrichtung 10 gezeigt, welches dazu eingerichtet ist, den Behälter 3 mit dem Deckel 12 durch ein am Deckel 12 angeordnetes Verschlusselement, beispielsweise einen Drehriegel, zu verriegeln. Hierbei versetzt ein zweiter pneumatischer Drehzylinder 21c eine zweite scheibenförmige Basisplatte 21b, auf der ein Betätigungsvorsprung 21a montiert ist, in Rotation. Vorzugsweise wird durch eine Rotation der Basisplatte 21b der Betätigungsvorsprung 21a in Wechselwirkung mit dem Verschlusselement gebracht und betätigt dieses, um den Deckel 12 fest mit dem Behälter 3 zu verriegeln.

Figur 4 zeigt ein Beispiel einer Behältertransporteinrichtung 22, welche vorzugsweise zusammen mit der vorstehend im Zusammenhang mit Figur 1 beschriebenen Vorrichtung 1 einsetzbar ist. Die Behältertransporteinrichtung 22 ist im gezeigten Beispiel als Transportwagen ausgebildet und weist einen Rahmen 23 auf, in dem mehrere Stapelführungen 24 zur Aufnahme von in Behälter-Ausgabestapeln 15 gestapelten Behältern 3 angeordnet sind, die mit Wertdokumenten befüllt und mit einem Deckel verschlossen sind. Um den jeweils untersten Behälter 3 eines Ausgabestapels 15 und damit den gesamten Ausgabestapel 15 gegen die Schwerkraft abzustützen, weisen die Stapelführungen 24 vorzugsweise Rastelemente 14a auf, welche ein Zuführen eines weiteren Behälters 3 zum jeweiligen Ausgabestapel 15 von unten erlauben, ein durch die Schwerkraft getriebenes Rutschen des jeweils untersten Behälters 3 des Ausgabestapels 15 aus dem Ausgabestapel 15 heraus jedoch verhindern.

Die Behältertransporteinrichtung 22 kann an die Vorrichtung 1 herangefahren und ggf. angedockt werden, wobei sie z.B. mit Hilfe entsprechender Führungen oder Andockelemente im Bereich der Ausgabeeinrichtung 14 der Vorrichtung 1 positioniert wird. Damit wird eine bestimmte Relativposition zwischen Behältertransporteinrichtung und Vorrichtung sichergestellt, in der (befüllte und mit Deckel verschlossene) Behälter 3 einzeln nacheinander von der Transporteinrichtung 7 der Vorrichtung 1 an die Behältertransporteinrichtung 22 übergeben werden können. Um den Behälter-Ausgabestapeln 15, die sich in der Behältertransporteinrichtung 22 befinden, weitere befüllte Behälter von unten zuführen zu können, ist die Behältertransporteinrichtung 22 vorzugsweise dazu eingerichtet, derart im Bereich eines Teils der Transporteinrichtung 7 der Vorrichtung 1, insbesondere an einem Transportband 8 und mehreren Hubelementen 9 der Vorrichtung 1 (vgl. Figur 1), positioniert zu werden, dass die Ausgabestapel 15 der Behältertransporteinrichtung 22 jeweils über einem Hubelement 9 der zur Vorrichtung 1 gehörigen Transporteinrichtung 7 angeordnet sind. Vorteilhaft ist dabei, dass die zur Übergabe der Behälter 3 erforderlichen Aktuatoren (z.B. Zylinder, Heber, etc.) Teil der Vorrichtung 1 sind und die Behältertransporteinrichtung 22 selbst keine Aktuatoren oder Transportmittel zum Transportieren der Behälter 3 benötigt. Daher kann eine einfache und kostengünstige Behältertransporteinrichtung 22 verwendet werden.

Alternativ können das in Figur 4 unter den Behälter-Ausgabestapeln 15 befindliche Transportelement und die Hubelemente auch Teile der Behältertransporteinrichtung 22 sein und die Behältertransporteinrichtung 22 so an dem Transportelement 8 der Vorrichtung 1 positioniert werden, dass die befüllten Behälter von dem Transportelement 8 der Vorrichtung 1 an das Transportelement der Behälter-Transporteinrichtung 22 übergeben werden können. In diesem Fall kann in der Vorrichtung 1 auf eine Ausgabeeinrichtung 14 verzichtet werden.

Die Behältertransporteinrichtung 22 weist zum Zweck der Positionierung mehrere Räder 25, beispielsweise sog. Castorräder, auf, durch welche die Behältertransporteinrichtung 22 leicht manövrierbar und an der Vorrichtung 1 positionierbar ist. Im gezeigten Beispiel sind ferner Stützbeine 26 vorgesehen, durch welche die Transporteinrichtung 7 der Vorrichtung räumlich fixiert wird. Die Behältertransporteinrichtung 22 kann manuell zu bewegen sein. Sie kann aber auch als Transportfahrzeug, insbesondere fahrerloses Transportfahrzeug (AGV) ausgebildet sein oder dazu eingerichtet sein, durch ein Transportfahrzeug, insbesondere durch ein fahrerloses Transportfahrzeug (AGV), bewegt zu werden.

## Patentansprüche

1. Vorrichtung (1) zum Befüllen von Behältern (3) mit Wertdokumenten (2), mit
- einer Behälteraufnahmeeinrichtung (4), welche dazu eingerichtet ist, einen Behälterstapel (5), welcher zwei oder mehrere Behälter (3) zur Aufnahme von Wertdokumenten (2) aufweist, aufzunehmen,
- einer Deckelaufnahmeeinrichtung (11), welche dazu eingerichtet ist, einen Deckelstapel (13), welcher zwei oder mehrere Deckel (12) zum Verschließen der Behälter (3) aufweist, aufzunehmen,
- einer Behälterentnahmeeinrichtung (6), welche dazu eingerichtet ist, einen Behälter, vorzugsweise den jeweils untersten Behälter (3), aus dem von der Behälteraufnahmeeinrichtung (4) aufgenommenen Behälterstapel (5) zu entnehmen,
- einer Verschließeinrichtung (10) zum Verschließen des jeweiligen Behälters (13) mit einem Deckel (12),
- einer Ausgabeeinrichtung (14), und
- einer Transporteinrichtung (7), welche dazu eingerichtet ist,
- den aus dem Behälterstapel (5) entnommenen Behälter (3) zu einer Befüllstation (40) zu befördern, in welcher der Behälter (3) mit Wertdokumenten (2) befüllt werden kann, und
- den mit Wertdokumenten (2) befüllten Behälter (3) zur Verschließeinrichtung (10) zu befördern, welche dazu eingerichtet ist, den befüllten Behälter (3) mit einem aus dem Deckelstapel entnommenen Deckel (12) zu verschließen, und
- den mit Wertdokumenten (2) befüllten und mit Deckel (12) verschlossenen Behälter (3) von der Verschließeinrichtung (10) zu der Ausgabeeinrichtung (14) zu befördern, wobei die Ausgabeeinrichtung (14) dazu eingerichtet ist, die mit Wertdokumenten (2) befüllten und mit Deckel (12) verschlossenen Behälter (3) in einem Behälter-Ausgabestapel (15) auszugeben, und
- einer Befülleinrichtung (41), welche eine Greifeinrichtung (42) aufweist und dazu eingerichtet ist, einen Stapel von Wertdokumenten (2) mit der Greifeinrichtung (42) zu greifen und in dem zur Befüllstation (40) beförderten Behälter (3) abzulegen.

2. Vorrichtung (1) nach Anspruch 1, wobei die Behälter (3), welche in dem von der Behälteraufnahmeeinrichtung (4) aufgenommenen Behälterstapel (5) enthalten sind, und/oder die Deckel (12), welche in dem von der Deckelaufnahmeeinrichtung (11) aufgenommenen Deckelstapel (13) enthalten sind, entlang einer Stapelrichtung gestapelt sind, welche im Wesentlichen senkrecht auf der Bewegungsrichtung steht, entlang der die Behälter von der Transporteinrichtung (7) befördert werden.

3. Vorrichtung (1) nach einem der vorhergehenden Ansprüche, wobei die Verschließeinrichtung (10) dazu eingerichtet ist, einen Deckel (12), insbesondere den jeweils untersten Deckel (12), aus dem Deckelstapel (13) zu entnehmen und den mit Wertdokumenten (2) befüllten Behälter (3) mit dem aus dem Deckelstapel (13) entnommenen Deckel (12) zu verschließen, wobei die Verschließeinrichtung (10) insbesondere derart eingerichtet ist, dass der aus dem Deckelstapel (13) entnommene unterste Deckel (12) durch die Schwerkraft auf dem befüllten Behälter (3) abgelegt wird.

4. Vorrichtung (1) nach einem der vorangehenden Ansprüche, wobei die Verschließeinrichtung (10) ein erstes Schubelement (20) aufweist, welches dazu eingerichtet ist, einen auf dem befüllten Behälter (3) abgelegten Deckel (12) relativ zum Behälter (3), insbesondere parallel zur Oberseite des Behälters, in eine Verschlussposition zu verschieben, in welcher der Behälter (3) mit dem Deckel (12) verriegelbar ist, und wobei die Verschließeinrichtung (10) vorzugsweise ein zweites Schubelement (21) aufweist, welches dazu eingerichtet ist, den auf dem befüllten Behälter (3) in der Verschlussposition angeordneten Deckel (12) durch Betätigung eines am Deckel (12) befindlichen Verschlusselements, zu verriegeln.

5. Vorrichtung (1) nach einem der vorangehenden Ansprüche, wobei die Verschließeinrichtung (10) ein erstes Stützelement (16a) und ein zweites Stützelement (16b) aufweist, die an einander gegenüberliegenden Seiten der im Deckelstapel (13) befindlichen Deckel (12) angeordnet sind und welche dazu eingerichtet sind, von einer Ausgangsposition der Stützelemente, in der die Stützelemente (16a, 16b) vom Deckelstapel (13) zurückgezogen sind in eine Stützposition gebracht zu werden, in der das erste und zweite Stützelement (16a, 16b) den von der Deckelaufnahmeeinrichtung (11) aufgenommenen Deckelstapel (13) gegen die Schwerkraft abstützen,

6. Vorrichtung (1) nach einem der vorangehenden Ansprüche, wobei die Verschließeinrichtung (10) ein erstes Vereinzelungselement (17a) und ein zweites Vereinzelungselement (17b) aufweist, welche an einander gegenüberliegenden Seiten der im Deckelstapel (13) befindlichen Deckel (12) angeordnet sind und dazu eingerichtet sind, von einer Ausgangsposition der Vereinzelungselemente, in der die Vereinzelungselemente (17a, 17b) vom Deckelstapel (13) zurückgezogen sind, in eine Vereinzelungsposition gebracht zu werden, in der das erste und zweite Vereinzelungselement (17a, 17b) die über dem untersten Deckel (12) gestapelten Deckel (12) gegen die Schwerkraft abstützen.

7. Vorrichtung (1) nach Anspruch 5 und 6, wobei das erste Stützelement (16a) mit dem ersten Vereinzelungselement (17a) und das zweite Stützelement (16b) mit dem zweiten Vereinzelungselement (17b) derart mechanisch gekoppelt ist, dass beim Entnehmen des jeweils untersten Deckels (12) aus dem Deckelstapel (13) das erste und das zweite Stützelement (16a, 16b) aus der Stützposition entfernt und in ihre Ausgangsposition zurückgebracht werden und gleichzeitig das erste und das zweite Vereinzelungselement (17a, 17b) von ihrer Ausgangsposition in die Vereinzelungsposition gebracht werden.

8. Vorrichtung (1) nach einem der vorangehenden Ansprüche, wobei die Transporteinrichtung (7) ein Transportelement (8) zur Beförderung des Behälters (3) und wenigstens ein Hubelement (9) zum vertikalen Bewegen des jeweiligen Behälters aufweist, welches im Bereich der Behälterentnahmeeinrichtung (6) und/oder im Bereich der Befüllstation (40) und/oder im Bereich der Verschließeinrichtung (10) angeordnet und dazu eingerichtet ist, den aus dem Behälterstapel (5) entnommenen Behälter (3) dem Transportelement (8) zuzuführen, insbesondere den jeweiligen Behälter von dem Transportelement (8) aus nach oben anzuheben bzw. den jeweiligen Behälter von oben auf das Transportelement (8) abzulegen.

9. Vorrichtung (1) nach einem der vorangehenden Ansprüche, wobei die Ausgabeeinrichtung (14) dazu eingerichtet ist, den jeweiligen mit Wertdokumenten (2) befüllten und mit dem Deckel (12) verschlossenen Behälter (3) in dem Behälter-Ausgabestapel (15) zuunterst anzuordnen.

10. Vorrichtung (1) nach einem der vorangehenden Ansprüche mit einer Behältertransporteinrichtung (22), welche dazu eingerichtet ist, den Behälter-Ausgabestapel (15) aufzunehmen, wobei die Ausgabeeinrichtung (14) und die Behältertransporteinrichtung (22) derart zueinander positionierbar sind und dazu eingerichtet sind, dass die mit Wertdokumenten (2) befüllten und mit dem Deckel (12) verschlossenen Behälter (3) von der Ausgabeeinrichtung (14) an die Behältertransporteinrichtung (22) ausgegeben werden können.

11. Wertdokumentbearbeitungssystem (100) zum Bearbeiten, insbesondere Sortieren, Zählen und/oder Prüfen, von Wertdokumenten (2), insbesondere Banknoten, mit
- einer Wertdokumentbearbeitungsvorrichtung (30), welche dazu eingerichtet ist, bearbeitete Wertdokumente (2) in wenigstens einem Ausgabefach (31) auszugeben, und
- einer Vorrichtung (1) zum Befüllen von Behältern (3) mit Wertdokumenten (2) nach einem der Ansprüche 1 bis 10, wobei die Befülleinrichtung (41) dazu eingerichtet ist, einen zur Befüllstation (40) der Vorrichtung (1) beförderten Behälter (3) mit den im wenigstens einen Ausgabefach (31) der Wertdokumentbearbeitungsvorrichtung (30) ausgegebenen Wertdokumenten (2) zu befüllen.

12. Wertdokumentbearbeitungssystem (100) nach Anspruch 11, wobei
- die Vorrichtung (1) eine Steuereinrichtung (27) aufweist und eine Leseeinrichtung aufweist, welche dazu eingerichtet ist, Identifikationsdaten des jeweiligen Behälters (3) zu erfassen, und
- die Wertdokumentbearbeitungsvorrichtung (30) dazu eingerichtet ist, Identifikationsdaten der bearbeiteten Wertdokumente (2) an die Steuereinrichtung (27) der Vorrichtung (1) zu übermitteln, und
- die Steuereinrichtung (27) der Vorrichtung (1) dazu eingerichtet ist, die von der Wertdokumentbearbeitungsvorrichtung (30) an die Steuereinrichtung (27) übermittelten Identifikationsdaten der bearbeiteten Wertdokumente (2), mit denen der jeweilige Behälter (3) von der Befüllstation (40) befüllt wurde, den von der Leseeinrichtung erfassten Identifikationsdaten des jeweiligen Behälters zuzuordnen, insbesondere Identifikationsdaten der Wertdokumente (2) mit Identifikationsdaten des Behälters (3) in einer Datenbank zu verknüpfen

13. Verfahren zum Befüllen von Behältern (3) mit Wertdokumenten (2) mit Hilfe der Vorrichtung nach einem der Ansprüche 1 bis 10, mit den folgenden Schritten:
- Entnehmen eines Behälters (3), insbesondere des jeweils untersten Behälters (3), aus einem Behälterstapel (5), welcher zwei oder mehrere Behälter (3) zur Aufnahme von Wertdokumenten (2) aufweist;
- Befördern des entnommenen Behälters (3) zu der Befüllstation (40), in welcher der Behälter (3) mit Wertdokumenten (2) befüllt wird;
- Befördern des mit Wertdokumenten (2) befüllten Behälters (3) zu der Verschließeinrichtung (10), in welcher der mit Wertdokumenten (2) befüllte Behälter (3) mit einem Deckel (12) verschlossen wird, welcher aus einem Deckelstapel (13), welcher zwei oder mehrere Deckel (12) zum Verschließen der Behälter (3) aufweist, entnommen wird.

## Claims

1. Apparatus (1) for filling containers (3) with value documents (2), comprising
- a container-receiving device (4), which is designed to receive a container stack (5) comprising two or more containers (3) for receiving value documents (2),
- a cover-receiving device (11), which is designed to receive a cover stack (13) comprising two or more covers (12) for closing the containers (3),
- a container-removal device (6), which is designed to remove a container, preferably the lowermost container (3) in each case, from the container stack (5) received by the container-receiving device (4),
- a closing device (10) for closing the respective container (13) with a cover (12),
- an output device (14), and
- a transport device (7), which is designed
- to convey the container (3) removed from the container stack (5) to a filling station (40) in which the container (3) can be filled with value documents (2), and
- to convey the container (3), which is filled with value documents (2), to the closing device (10), which is designed to close the filled container (3) with a cover (12) removed from the cover stack, and
- to convey the container (3), which is filled with value documents (2) and closed with a cover (12), from the closing device (10) to the output device (14), the output device (14) being designed to output the containers (3), which are filled with value documents (2) and are closed with a cover (12), in a container output stack (15), and
- a filling device (41), which has a gripping device (42) and is designed to grip a stack of value documents (2) with the gripping device (42) and to deposit same in the container (3) conveyed to the filling station (40).

2. Apparatus (1) according to Claim 1, wherein the containers (3), which are contained in the container stack (5) received by the container-receiving device (4), and/or the covers (12), which are contained in the cover stack (13) received by the cover-receiving device (11), are stacked along a stacking direction which is substantially perpendicular to the direction of movement along which the containers are conveyed by the transport device (7).

3. Apparatus (1) according to either of the preceding claims, wherein the closing device (10) is designed to remove a cover (12), in particular the lowermost cover (12) in each case, from the cover stack (13) and to close the container (3), which is filled with value documents (2), with the cover (12) removed from the cover stack (13), the closing device (10) being designed in particular in such a way that the lowermost cover (12) removed from the cover stack (13) is deposited on the filled container (3) by gravity.

4. Apparatus (1) according to any one of the preceding claims, wherein the closing device (10) has a first push element (20), which is designed to move a cover (12), which is deposited on the filled container (3), relative to the container (3), in particular parallel to the upper side of the container, into a closure position in which the container (3) is lockable with the cover (12), and wherein the closing device (10) preferably has a second push element (21), which is designed to lock the cover (12), which is arranged on the filled container (3) in the closure position, by actuation of a closure element located on the cover (12).

5. Apparatus (1) according to any one of the preceding claims, wherein the closing device (10) has a first support element (16a) and a second support element (16b), which are arranged on mutually opposite sides of the covers (12) located in the cover stack (13) and which are designed to be brought from a starting position of the support elements, in which the support elements (16a, 16b) are pulled back from the cover stack (13), into a supporting position, in which the first and second support elements (16a, 16b) support the cover stack (13), which is received by the cover-receiving device (11), against gravity.

6. Apparatus (1) according to any one of the preceding claims, wherein the closing device (10) has a first separation element (17a) and a second separation element (17b), which are arranged on mutually opposite sides of the covers (12) located in the cover stack (13) and are designed to be brought from a starting position of the separation elements, in which the separation elements (17a, 17b) are pulled back from the cover stack (13), into a separation position, in which the first and second separation elements (17a, 17b) support the covers (12), which are stacked above the lowermost cover (12), against gravity.

7. Apparatus (1) according to Claims 5 and 6, wherein the first support element (16a) is mechanically coupled to the first separation element (17a) and the second support element (16b) is mechanically coupled to the second separation element (17b) in such a way that, when the lowermost cover (12) in each case is removed from the cover stack (13), the first and second support elements (16a, 16b) are removed from the supporting position and returned to their starting position and at the same time the first and the second separation elements (17a, 17b) are brought from their starting position into the separation position.

8. Apparatus (1) according to any one of the preceding claims, wherein the transport device (7) has a transport element (8) for conveying the container (3), and at least one lifting element (9) for vertically moving the respective container, which lifting element is arranged in the region of the container-removal device (6) and/or in the region of the filling station (40) and/or in the region of the closing device (10) and is designed to supply the container (3) removed from the container stack (5) to the transport element (8), in particular to lift the respective container upwards from the transport element (8) or to deposit the respective container onto the transport element (8) from above.

9. Apparatus (1) according to any one of the preceding claims, wherein the output device (14) is designed to arrange the respective container (3), which is filled with value documents (2) and closed with the cover (12), at the very bottom of the container output stack (15).

10. Apparatus (1) according to any one of the preceding claims, having a container transport device (22), which is designed to receive the container output stack (15), wherein the output device (14) and the container transport device (22) can be positioned with respect to each other and are designed in such a way that the containers (3), which are filled with value documents (2) and closed with the cover (12), can be output from the output device (14) to the container transport device (22).

11. Value document processing system (100) for processing, in particular sorting, counting and/or checking, value documents (2), in particular banknotes, comprising
- a value document processing apparatus (30), which is designed to output processed value documents (2) in at least one output compartment (31), and
- an apparatus (1) for filling containers (3) with value documents (2) according to any one of Claims 1 to 10, wherein the filling device (41) is designed to fill a container (3), which is conveyed to the filling station (40) of the apparatus (1), with the value documents (2) output in the at least one output compartment (31) of the value document processing apparatus (30).

12. Value document processing system (100) according to Claim 11, wherein
- the apparatus (1) has a control device (27) and a reading device, which is designed to detect identification data of the respective container (3), and
- the value document processing apparatus (30) is designed to transmit identification data of the processed value documents (2) to the control device (27) of the apparatus (1), and
- the control device (27) of the apparatus (1) is designed to assign the identification data of the processed value documents (2), which identification data are transmitted by the value document processing apparatus (30) to the control device (27) and with which the respective container (3) has been filled by the filling station (40), to the identification data, detected by the reading device, of the respective container, in particular to link identification data of the value documents (2) with identification data of the container (3) in a database.

13. Method for filling containers (3) with value documents (2) by means of the apparatus according to any one of Claims 1 to 10, comprising the following steps:
- removing a container (3), in particular the lowermost container (3) in each case, from a container stack (5) comprising two or more containers (3) for receiving value documents (2);
- conveying the removed container (3) to the filling station (40), in which the container (3) is filled with value documents (2);
- conveying the container (3), which is filled with value documents (2), to the closing device (10), in which the container (3), which is filled with value documents (2), is closed with a cover (12), which is removed from a cover stack (13) comprising two or more covers (12) for closing the containers (3).

## Revendications

1. Dispositif (1) pour remplir des récipients (3) avec des documents de valeur (2), comprenant
- un appareil de réception de récipients (4) qui est adapté pour recevoir une pile de récipients (5) comprenant deux ou plus de deux récipients (3) destinés à recevoir des documents de valeur (2),
- un appareil de réception de couvercles (11) qui est adapté pour recevoir une pile de couvercles (13) comprenant deux ou plus de deux couvercles (12) destinés à fermer les récipients (3),
- un appareil de prélèvement de récipients (6) qui est adapté pour prélever un récipient, de préférence le récipient (3) le plus inférieur, de la pile de récipients (5) reçue par l'appareil de réception de récipients (4),
- un appareil de fermeture (10) pour fermer le récipient respectif (13) avec un couvercle (12),
- un appareil de distribution (14), et
- un appareil de transport (7) qui est adapté pour
- transporter le récipient (3) prélevé de la pile de récipients (5) vers une station de remplissage (40) dans laquelle le récipient (3) peut être rempli de documents de valeur (2), et
- transporter le récipient (3) rempli de documents de valeur (2) vers l'appareil de fermeture (10), qui est adapté pour fermer le récipient rempli (3) à l'aide d'un couvercle (12) prélevé de la pile de couvercles, et
- transporter le récipient (3) rempli de documents de valeur (2) et fermé par un couvercle (12) par l'appareil de fermeture (10) vers l'appareil de distribution (14), l'appareil de distribution (14) étant adapté pour distribuer le récipient (3) rempli de documents de valeur (2) et fermé par un couvercle (12) dans une pile de distribution de récipients (15), et
- un appareil de remplissage (41) qui présente un appareil de préhension (42) et qui est adapté pour saisir une pile de documents de valeur (2) à l'aide de l'appareil de préhension (42) et pour la déposer dans le récipient (3) transporté vers la station de remplissage (40).

2. Dispositif (1) selon la revendication 1, dans lequel les récipients (3) contenus dans la pile de récipients (5) reçue par l'appareil de réception de récipients (4) et/ou les couvercles (12) contenus dans la pile de couvercles (13) reçue par l'appareil de réception de couvercles (11) sont empilés selon une direction d'empilage qui est essentiellement perpendiculaire à la direction de déplacement selon laquelle les récipients sont transportés par l'appareil de transport (7).

3. Dispositif (1) selon l'une quelconque des revendications précédentes, dans lequel l'appareil de fermeture (10) est adapté pour prélever un couvercle (12), notamment le couvercle (12) le plus inférieur, de la pile de couvercles (13) et pour fermer le récipient (3) rempli de documents de valeur (2) avec le couvercle (12) prélevé de la pile de couvercles (13), l'appareil de fermeture (10) étant notamment adapté de telle sorte que le couvercle le plus inférieur (12) prélevé de la pile de couvercles (13) soit déposé par gravité sur le récipient rempli (3).

4. Dispositif (1) selon l'une quelconque des revendications précédentes, dans lequel l'appareil de fermeture (10) présente un premier élément de poussée (20) qui est adapté pour déplacer un couvercle (12) posé sur le récipient rempli (3) par rapport au récipient (3), notamment parallèlement au côté supérieur du récipient, dans une position de fermeture dans laquelle le récipient (3) peut être verrouillé avec le couvercle (12), et dans lequel l'appareil de fermeture (10) présente de préférence un deuxième élément de poussée (21) qui est adapté pour verrouiller le couvercle (12) agencé sur le récipient rempli (3) dans la position de fermeture, par actionnement d'un élément de fermeture se trouvant sur le couvercle (12).

5. Dispositif (1) selon l'une quelconque des revendications précédentes, dans lequel l'appareil de fermeture (10) présente un premier élément de soutien (16a) et un deuxième élément de soutien (16b) qui sont agencés sur des côtés opposés des couvercles (12) se trouvant dans la pile de couvercles (13) et qui sont adaptés pour être amenés, à partir d'une position initiale des éléments de soutien dans laquelle les éléments de soutien (16a, 16b) sont retirés de la pile de couvercles (13), à une position de soutien dans laquelle les premier et deuxième éléments de soutien (16a, 16b) soutiennent la pile de couvercles (13) reçue par l'appareil de réception de couvercles (11) contre la force de gravité.

6. Dispositif (1) selon l'une quelconque des revendications précédentes, dans lequel l'appareil de fermeture (10) présente un premier élément de séparation (17a) et un deuxième élément de séparation (17b) qui sont agencés sur des côtés opposés des couvercles (12) se trouvant dans la pile de couvercles (13) et sont adaptés pour être amenés, à partir d'une position initiale des éléments de séparation dans laquelle les éléments de séparation (17a, 17b) sont retirés de la pile de couvercles (13), à une position de séparation dans laquelle les premier et deuxième éléments de séparation (17a, 17b) soutiennent les couvercles (12) empilés au-dessus du couvercle le plus inférieur (12) contre la force de gravité.

7. Dispositif (1) selon les revendications 5 et 6, dans lequel le premier élément de soutien (16a) étant couplé mécaniquement au premier élément de séparation (17a) et le deuxième élément de soutien (16b) au deuxième élément de séparation (17b) de telle sorte que, lors du prélèvement du couvercle (12) le plus inférieur de la pile de couvercles (13), le premier et le deuxième élément de soutien (16a, 16b) sont retirés de la position de soutien et ramenés dans leur position initiale et que, simultanément, le premier et le deuxième élément de séparation (17a, 17b) sont amenés de leur position initiale dans la position de séparation.

8. Dispositif (1) selon l'une quelconque des revendications précédentes, dans lequel l'appareil de transport (7) présente un élément de transport (8) pour transporter le récipient (3) et au moins un élément de levage (9) pour déplacer verticalement le récipient respectif, lequel est agencé dans la zone de l'appareil de prélèvement de récipients (6) et/ou dans la zone de la station de remplissage (40) et/ou dans la zone de l'appareil de fermeture (10) et est adapté pour acheminer le récipient (3) prélevé de la pile de récipients (5) vers l'élément de transport (8), notamment pour soulever le récipient respectif vers le haut à partir de l'élément de transport (8) ou pour déposer le récipient respectif par le haut sur l'élément de transport (8).

9. Dispositif (1) selon l'une quelconque des revendications précédentes, dans lequel l'appareil de distribution (14) est adapté pour agencer le récipient (3) respectif, rempli de documents de valeur (2) et fermé par le couvercle (12), tout en bas de la pile de récipients à distribuer (15).

10. Dispositif (1) selon l'une quelconque des revendications précédentes, comprenant un appareil de transport de récipients (22) qui est adapté pour recevoir la pile de récipients à distribuer (15), l'appareil de distribution (14) et l'appareil de transport de conteneurs (22) pouvant être positionnés l'un par rapport à l'autre et étant adaptés de telle sorte que les récipients (3) remplis de documents de valeur (2) et fermés par le couvercle (12) puissent être distribués par l'appareil de distribution (14) à l'appareil de transport de récipients (22).

11. Système de traitement de documents de valeur (100) pour traiter, notamment trier, compter et/ou contrôler, des documents de valeur (2), notamment des billets de banque, comprenant
- un dispositif de traitement de documents de valeur (30) qui est adapté pour distribuer les documents de valeur traités (2) dans au moins un bac de distribution (31), et
- un dispositif (1) pour remplir des récipients (3) avec des documents de valeur (2) selon l'une quelconque des revendications 1 à 10, l'appareil de remplissage (41) étant adapté pour remplir un récipient (3) transporté vers la station de remplissage (40) du dispositif (1) avec les documents de valeur (2) distribués dans au moins un compartiment de distribution (31) du dispositif de traitement de documents de valeur (30).

12. Système de traitement de documents de valeur (100) selon la revendication 11, dans lequel
- le dispositif (1) présente un appareil de commande (27) et un appareil de lecture qui est adapté pour détecter les données d'identification du récipient (3) respectif, et
- le dispositif de traitement des documents de valeur (30) est adapté pour transmettre les données d'identification des documents de valeur traités (2) à l'appareil de commande (27) du dispositif (1), et
- l'appareil de commande (27) du dispositif (1) est adapté pour attribuer les données d'identification des documents de valeur traités (2), avec lesquels le récipient respectif (3) a été rempli par la station de remplissage (40), transmises par le dispositif de traitement des documents de valeur (30) à l'appareil de commande (27), aux données d'identification du récipient respectif détectées par l'appareil de lecture, notamment de relier les données d'identification des documents de valeur (2) aux données d'identification du récipient (3) dans une base de données.

13. Procédé pour remplir des récipients (3) avec des documents de valeur (2) à l'aide du dispositif selon l'une quelconque des revendications 1 à 10, comprenant les étapes suivantes :
- le prélèvement d'un récipient (3), notamment du récipient (3) le plus inférieur, d'une pile de récipients (5) qui présente deux ou plus de deux récipients (3) destinés à recevoir des documents de valeur (2) ;
- le transport du récipient (3) prélevé vers la station de remplissage (40), dans laquelle le récipient (3) est rempli de documents de valeur (2) ;
- le transport du récipient (3) rempli de documents de valeur (2) vers l'appareil de fermeture (10), dans lequel le récipient (3) rempli de documents de valeur (2) est fermé à l'aide d'un couvercle (12) qui est prélevé d'une pile de couvercles (13) présentant deux ou plus de deux couvercles (12) destinés à fermer les récipients (3).
